(19) Europäisches Patentamt
European Patent Office
Office européen des brevets

(11) **EP 3 310 733 B1**

(12) **FASCICULE DE BREVET EUROPEEN**

(45) Date de publication et mention
de la délivrance du brevet:
**06.03.2019 Bulletin 2019/10**

(21) Numéro de dépôt: **16736905.7**

(22) Date de dépôt: **16.06.2016**

(51) Int Cl.:
*C04B 26/04* (2006.01)       *C04B 26/08* (2006.01)
*C04B 26/10* (2006.01)       *C04B 26/32* (2006.01)
*C04B 35/583* (2006.01)      *C04B 35/626* (2006.01)
*C04B 38/00* (2006.01)       *C01B 21/064* (2006.01)

(86) Numéro de dépôt international:
**PCT/FR2016/051468**

(87) Numéro de publication internationale:
**WO 2016/203164 (22.12.2016 Gazette 2016/51)**

(54) **POUDRE D'AGREGATS A BASE DE NITRURE DE BORE**

BORNITRIDAGGREGATPULVER

BORON NITRIDE AGGREGATE POWDER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.06.2015 FR 1555543**

(43) Date de publication de la demande:
**25.04.2018 Bulletin 2018/17**

(73) Titulaire: **Saint-Gobain Centre De Recherches
Et D'etudes Europeen
92400 Courbevoie (FR)**

(72) Inventeurs:
• **NAHAS, Nabil
  13008 Marseille (FR)**
• **BAHON, Elodie
  13300 Salon de Provence (FR)**
• **BOUSSANT-ROUX, Yves
  84140 Montfavet (FR)**

(74) Mandataire: **Saint-Gobain Recherche
Département Propriété Industrielle
39 Quai Lucien Lefranc
93300 Aubervilliers (FR)**

(56) Documents cités:
WO-A1-03/013845      WO-A1-2014/136959
JP-A- 2014 028 749   US-A1- 2012 114 905

**Description**

L'invention se rapporte à des poudres d'agrégats à base de nitrure de bore ainsi que leur utilisation dans un composite polymère-céramique ou polymère chargé, c'est à dire en tant que charge dans une matrice polymère.

L'utilisation de poudres de particules minérales comme charge dans les polymères est bien connue de l'état de la technique, cette charge permettant d'apporter des fonctionnalités supplémentaires, en fonction notamment des propriétés du matériau constituant la charge. Ces fonctionnalités sont par exemple l'augmentation de la conductivité thermique et/ou de la dureté et/ou de la densité du polymère. Les polymères chargés ainsi obtenus trouvent notamment leur application dans de très nombreux domaines techniques comme les matériaux d'interface thermique, comme par exemple les pâtes thermiques ou les dissipateurs thermiques, ou encore les cartes de circuits imprimés.

En particulier les poudres de nitrure de bore (BN) sont connues pour être utilisées comme charge dans les polymères. On peut citer entre autres les publications US2003/0073769, US2008/0076856, WO2008/088774 et WO2014/136959 dans ce domaine. L'utilisation d'une poudre de BN est en particulier connue pour augmenter la conductivité thermique du polymère, ce qui est particulièrement recherché dans les applications de matériau d'interface thermique, comme les pâtes thermiques.

La demande WO2014/136959 concerne une poudre de nitrure de bore appropriée pour une utilisation dans une composition de résine pour transmettre de la chaleur d'un composant électronique produisant de la chaleur. Cette poudre de nitrure de bore contient des particules de nitrure de bore consistant chacune en des particules primaires de nitrure de bore hexagonales réunies ensemble. La poudre d'agrégats de BN présente une sphéricité moyenne supérieure à 0,70, une taille moyenne comprise entre 20 $\mu$m et 100 $\mu$m, une porosité comprise entre 50% et 80%, un diamètre de pores moyen compris entre 0,10 et 2,0 $\mu$m, une taille maximale de pores inférieure à 10 $\mu$m et une teneur en calcium comprise entre 500 ppm et 5000 ppm. Dans le paragraphe [0020] de cette demande, il est autrement indiqué que la présence d'une teneur minimale en calcium est d'une importance primordiale pour l'obtention des propriétés requises. En particulier il est indiqué que ladite teneur en calcium doit être supérieure à 500 ppm pour que les agrégats présentent un frittage suffisant pour résister aux contraintes de mise en forme, lors de la fabrication du polymère chargé. Cependant, les essais menés par la société déposante, tels que reportés par la suite, ont montré qu'il était possible d'obtenir des agrégats dont l'usure par attrition est bien supérieure à celle des agrégats conformes à l'enseignement de cette publication.

L'un des objets principaux de la présente invention est ainsi de proposer une poudre d'agrégats présentant une usure par attrition faible, permettant en outre d'obtenir, une fois mélangée à différentes matrices de polymères, une bonne conductivité thermique.

La présente invention se rapporte à une poudre d'agrégats à base de BN, ainsi qu'aux agrégats eux-mêmes, permettant de résoudre l'ensemble des problèmes décrits précédemment.

Plus précisément, la présente invention se rapporte tout d'abord à une poudre (ou un mélange) constituée essentiellement d'agrégats à base de nitrure de bore, ladite poudre présentant :

a) la composition chimique globale suivante, en pourcentages massiques :

- entre 40 et 45% de bore, bornes incluses,
- entre 53 et 57% d'azote, bornes incluses,
- moins de 5%, au total, d'autres éléments,
- une teneur en calcium inférieure à 400 ppm poids;

b) une composition structurale comprenant plus de 90% de nitrure de bore, borne incluse, en pourcentages poids et sur la base de la totalité des phases cristallisées présentes dans ladite poudre ;

c) les caractéristiques physiques suivantes :

- Une circularité moyenne supérieure ou égale à 0,90,
- Une taille médiane de pores inférieure ou égale à 1, 5 $\mu$m,
- Une porosité ouverte inférieure ou égale à 55%.

Dans la présente description, tous les pourcentages sont massiques, sauf expressément spécifié.

Au sens de la présente invention, les éléments autres que O, C et N de ladite composition chimique, en particulier le bore et le calcium, sont mesurés classiquement sur la poudre d'agrégats par spectrométrie par torche à plasma (ou « AES-ICP » en anglais).

Au sens de la présente invention, les éléments O, C et N de ladite composition chimique sont mesurés classiquement sur la poudre d'agrégats par spectrométrie infrarouge pour les éléments O et C, et par conductivité thermique pour l'élément N, par exemple sur un appareil LECO série TC 436DR pour les éléments N et O et sur un appareil LECO série SC 144DR pour l'élément C.

Au sens de la présente invention, ladite composition structurale est obtenue classiquement à partir de la poudre d'agrégats par diffraction des rayons X et affinement Rietveld.

On entend par « constitué essentiellement » que la très grande majorité de ladite poudre est constituée desdits agrégats à base de nitrure de bore, sans exclure toutefois la présence de particules autres que des agrégats à base de nitrure de bore, comme des particules élémentaires de nitrure de bore, ces dernières étant cependant nécessairement en très faible quantité, au sens de la présente invention. On entend plus particulièrement que la poudre contient plus de 90% en masse, de préférence plus de 95% en masse, voire plus de 99% en masse desdits agrégats à base de nitrure de bore. Bien entendu, selon un mode de réalisation possible, la poudre est constituée uniquement d'agrégats à base de nitrure de bore, mis à part les inévitables impuretés.

Au sens de la présente invention on entend classiquement :

- Par « agrégat », un ensemble de particules comprenant le BN, lesdites particules étant assemblées ensemble et liées fortement de façon rigide, notamment par frittage, de manière à constituer les grains individualisés, appelés agrégats, qui constituent ladite poudre ;
- Par opposition, on entend par « agglomérat » un ensemble de particules faiblement liées et facilement dispersables.

Selon différents modes préférés de la présente invention, qui peuvent bien évidemment être combinés le cas échéant :

Dans ladite composition chimique :

- la teneur massique en bore est supérieure ou égale à 41%.
- la teneur massique en bore est inférieure ou égale à 44%.
- la teneur massique en azote est supérieure ou égale à 54%.
- la teneur massique en azote est inférieure ou égale à 56%.
- la teneur en calcium est inférieure à 300 ppm poids, de préférence inférieure à 200 ppm poids, de préférence inférieure à 100 ppm poids, de préférence encore inférieure à 50 ppm poids.
- Dans un mode de réalisation préféré, la teneur massique en d'autres éléments que ceux décrits dans ladite formulation chimique élémentaire qui précède est inférieure à 4%, de préférence inférieure à 2%, de préférence inférieure à 1%, de préférence inférieure à 0,5%, de préférence inférieure à 0,1%. Dans ledit mode de réalisation, ces éléments sont de préférence des impuretés, c'est-à-dire des éléments amenés non volontairement, par exemple par les matières premières utilisées dans la charge de départ, comme les éléments O, C, Mg, Fe, Si, Na, K.
- De préférence, la teneur en oxygène dans la poudre est inférieure à 5000 ppm poids, de préférence inférieure à 2000 ppm poids, voire inférieure à 1000 ppm poids.
- Dans un mode de réalisation particulier, lesdits autres éléments incluent un additif de frittage du nitrure de bore, en une quantité de préférence supérieure ou égale à 0,5%, de préférence supérieure à 1% et inférieure à 4%, de préférence inférieure à 3%, de préférence inférieure à 2%.
- L'additif de frittage du nitrure de bore est choisi parmi $LaB_6$ ; les oxydes de terres rares, d'éléments des colonnes 3 et 4 du tableau périodique des éléments et de leurs mélanges ; les nitrures des éléments de la colonne 4 du tableau périodique des éléments ; et leurs mélanges. De préférence ledit additif de frittage est choisi parmi $LaB_6$, $Y_2O_3$, les nitrures des éléments Ti, Zr, Si, Al et leurs mélanges. De préférence ledit additif de frittage est choisi parmi $LaB_6$, $Y_2O_3$, les nitrures des éléments Ti, Si, Al et leurs mélanges.
- La poudre selon l'invention contient très préférentiellement une teneur en oxyde de bore $B_2O_3$ inférieure à 5%, de préférence 2%, de préférence encore inférieure à 1%, ou même inférieure à 0,5%, et de manière très préférée inférieure à 0,1%.

La teneur en oxyde de bore $B_2O_3$ de la poudre selon l'invention est mesurée classiquement par titration au mannitol.

Au sens de la présente invention, on entend classiquement :

- par « additif de frittage » du nitrure de bore, un composé facilitant le frittage dudit nitrure de bore, par exemple en réduisant la température nécessaire audit frittage, en améliorant la densification ou en limitant la croissance cristalline ;
- par « terre rare », un élément du groupe des lanthanides plus le Scandium Sc et l'Yttrium Y ;
- par « lanthanide », un élément de numéro atomique compris entre 57 (lanthane) et 71 (lutécium) du tableau périodique.

Selon des modes préférés de la présente invention :

- Ladite composition structurale comprend plus de 95%, de préférence plus de 98%, de nitrure de bore, en pourcentages poids et sur la base de la totalité des phases cristallisées présentes dans ladite poudre.
- Ladite composition structurale comprend plus de 90%, de préférence plus de 95%, de préférence plus de 98%, de nitrure de bore, en pourcentages poids et sur la base de la masse de ladite poudre.
- Le nitrure de bore est présent pour plus de 60%, de préférence pour plus de 70%, de préférence pour plus de 80%, voire pour sensiblement 100% sous une structure hexagonale, en pourcentages poids et sur la base des phases cristallisées de nitrure de bore présentes dans ladite poudre.

Dans lesdites caractéristiques physiques :

- La poudre d'agrégats présente une circularité moyenne supérieure ou égale à 0,92, de préférence supérieure ou égale à 0,93, voire supérieure ou égale à 0,94, voire supérieure ou égale à 0,95.

Pour évaluer la circularité « Ci » d'un agrégat P, on détermine le périmètre $P_D$ du disque D présentant une aire égale à l'aire $A_p$ de l'agrégat P sur un cliché de cet agrégat. On détermine par ailleurs le périmètre $P_r$ de cet agrégat.

La circularité est égale au rapport de $P_D/P_r$ soit $Ci = \dfrac{2 * \sqrt{\pi A_p}}{\mathrm{Pr}}$. Plus l'agrégat est de forme allongée, plus la circularité est faible.

La circularité moyenne d'une poudre d'agrégats au sens de la présente invention correspond à la moyenne arithmétique des différentes valeurs obtenues pour la population d'agrégats constituant la poudre.

Toutes les méthodes de mesure connues pour évaluer la circularité peuvent être envisagées, et notamment une observation, manuelle ou automatisée, de clichés photographiques des agrégats, par exemple sur un appareil Morphologi® G3S commercialisé par la société Malvern. Un tel appareil permet également de déterminer la circularité moyenne d'une poudre d'agrégats.

- La poudre d'agrégats présente une taille médiane de pores inférieure ou égale à 1,3 $\mu$m, de préférence inférieure ou égale à 1,2 $\mu$m, de préférence inférieure ou égale à 1,0 $\mu$m, de préférence inférieure ou égale à 0,8 $\mu$m, de préférence inférieure ou égale à 0,5 $\mu$m. De manière encore plus préférée, la poudre d'agrégats présente une taille médiane de pores inférieure ou égale à 0,3 $\mu$m, de préférence inférieure ou égale à 0,25 $\mu$m, de préférence inférieure ou égale à 0,2 $\mu$m. De préférence encore, la poudre d'agrégats présente une taille médiane de pores supérieure à 0,05 $\mu$m.

La taille médiane des pores de la poudre d'agrégats est évaluée par porosimétrie au mercure selon la norme ISO 15901-1. On appelle « taille médiane » d'un ensemble de pores, notée $D_{50}$, la taille divisant les pores de cet ensemble en une première et une deuxième populations égales en volume, ces première et deuxième populations ne comportant que des pores présentant une taille supérieure ou inférieure, respectivement, à ladite taille médiane.

- La poudre d'agrégats présente une porosité ouverte inférieure à 53%, de préférence inférieure à 50%, de préférence inférieure à 49%, voire inférieure à 47%, voire inférieure à 45%.
- La poudre d'agrégats présente une porosité ouverte supérieure à 25%, voire supérieure à 30%, voire supérieure à 35%.

La porosité ouverte de la poudre d'agrégats est évaluée classiquement par porosimétrie au mercure selon la norme ISO 15901-1.

Selon d'autres modes préférés de mise en oeuvre de la présente invention :

- La poudre d'agrégats présente une taille médiane supérieure à 30 $\mu$m, de préférence supérieure à 50 $\mu$m et inférieure à 500 $\mu$m, de préférence inférieure à 400 $\mu$m, de préférence inférieure à 300 $\mu$m, de préférence inférieure à 200 $\mu$m. Dans un mode de réalisation, la taille médiane est comprise entre 40 $\mu$m et 70 $\mu$m. Dans un mode de réalisation, la taille médiane est comprise entre 100 $\mu$m et 150 $\mu$m.
- La poudre d'agrégats présente une taille maximale inférieure à 1 mm, de préférence inférieure à 750 $\mu$m.
- La poudre d'agrégats présente un percentile $D_{10}$ supérieur à 5 $\mu$m, de préférence supérieur à 10 $\mu$m, de préférence supérieur à 20 $\mu$m.
- La poudre d'agrégats présente un rapport $(D_{90}-D_{10})/D_{50}$ inférieur à 10, de préférence inférieur à 5, voire inférieur à 3, voire inférieur à 2. Avantageusement, la coulabilité de la poudre en est améliorée.

- De préférence, les agrégats comportent des plaquettes de nitrure de bore orientées de manière aléatoire. Les propriétés desdits agrégats sont alors essentiellement isotropes.

On appelle « taille médiane » d'un ensemble d'agrégats (ou de grains), notée $D_{50}$, la taille divisant les agrégats (les grains) de cet ensemble en une première et une deuxième populations égales en masse, ces première et deuxième populations ne comportant que des agrégats (les grains) présentant une taille supérieure ou inférieure, respectivement, à ladite taille médiane.

On appelle « percentiles » 10 (notée $D_{10}$), 90 (notée $D_{90}$) et 99,5 (notée $D_{99,5}$), les tailles d'agrégats (les grains), correspondant aux pourcentages égaux respectivement à 10%, 90% et 99,5%, en masse, sur la courbe de distribution granulométrique cumulée des tailles d'agrégats (les grains) de la poudre, lesdites tailles d'agrégats (les grains) étant classées par ordre croissant. Selon cette définition 10% en masse des agrégats de la poudre ont ainsi une taille inférieure à $D_{10}$ et 90% des agrégats, en masse, ont une taille supérieure à $D_{10}$. Les percentiles sont déterminés à l'aide d'une distribution granulométrique réalisée à l'aide d'un granulomètre laser. On appelle « taille maximale » d'une poudre, le percentile 99,5.

La répartition granulométrique des poudres d'agrégats (de grains) selon l'invention est par exemple déterminée par Diffusion Laser sur un granulomètre Camsizer commercialisé par la société Retsch technologies, sans mise en suspension de ladite poudre au préalable. De cette répartition granulométrique sont classiquement déterminés la taille médiane $D_{50}$, le percentile 10 ($D_{10}$) et le percentile 90 ($D_{90}$), ainsi que la taille maximale ($D_{99,5}$).

L'invention se rapporte également au procédé de fabrication d'une telle poudre.

Un premier procédé possible de fabrication d'une poudre d'agrégats selon l'invention comporte les étapes suivantes:

a) préparation d'une charge de départ dont la composition est adaptée de manière à obtenir, à l'issue de l'étape g), une poudre d'agrégats selon l'invention, ladite charge de départ comportant une poudre de grains de nitrure de bore dont la teneur en oxygène est inférieure ou égale à 10% poids et dont la teneur en calcium est inférieure à 400 ppm poids,

b) optionnellement broyage de ladite charge de départ,

c) mise en forme de la charge de départ sous la forme d'un bloc présentant une masse volumique relative supérieure ou égale à 60%,

d) broyage dudit bloc de manière à obtenir des agglomérats,

e) rodage des agglomérats obtenus en fin d'étape d) de manière à ce qu'ils présentent une circularité supérieure ou égale à 0,90,

f) optionnellement sélection granulométrique des agglomérats,

g) frittage des agglomérats à une température de frittage supérieure à 1600°C et inférieure à 2100°C, dans une atmosphère inerte ou faiblement réductrice et obtention des agrégats selon l'invention,

h) optionnellement sélection granulométrique des agrégats.

Un deuxième procédé alternatif de fabrication d'une poudre d'agrégats selon l'invention comporte les étapes suivantes :

a') préparation d'une charge de départ dont la composition est adaptée de manière à obtenir, à l'issue de l'étape f'), des agrégats selon l'invention, ladite charge de départ comportant des grains de nitrure de bore, la poudre de grains de nitrure de bore présentant une teneur en oxygène inférieure ou égale à 10% poids et une teneur en calcium inférieure à 400 ppm poids,

b') optionnellement broyage de ladite charge de départ, c') mise en forme de la charge de départ sous la forme d'un bloc présentant une masse volumique relative supérieure ou égale à 60%,

d') frittage dudit bloc à une température de frittage supérieure à 1600°C et inférieure à 2100°C, dans une atmosphère inerte ou faiblement réductrice,

e') broyage dudit bloc de manière à obtenir des agrégats,

f') rodage des agrégats obtenus en fin d'étape e') de manière à ce qu'ils présentent une circularité supérieure ou égale à 0,90,

g') optionnellement sélection granulométrique des agrégats.

On donne ci-après des précisions en ce qui concerne les étapes des procédés décrits précédemment :
Dans la partie qui suit comme dans l'ensemble de la description, tous les pourcentages sont donnés en poids, sauf autrement expressément indiqué.

A l'étape a) ou a'), on prépare à température ambiante une charge de départ, comportant une ou plusieurs poudres de nitrure de bore et optionnellement d'additifs de frittage du nitrure de bore.

Les poudres d'additifs de frittage du nitrure de bore peuvent également être remplacées, au moins partiellement, par des poudres de précurseurs de ces additifs de frittage, introduits dans des quantités équivalentes.

La ou les poudres de nitrure de bore sont de préférence choisies de manière que :

- la teneur totale en « autres éléments » soit inférieure à 5%, de préférence inférieure à 4%, de préférence inférieure à 3%, de préférence inférieure à 2%, de préférence inférieure à 1%, en pourcentage massique sur la base de la charge de départ,
- la teneur totale en calcium soit inférieure à 300 ppm poids, voire inférieure à 200 ppm poids, sur la base de la charge de départ,
- la teneur totale en oxygène soit inférieure à 8%, de préférence inférieure à 6%, de préférence inférieure à 5%, de préférence inférieure à 4%, de préférence inférieure à 2%, et de manière très préférée inférieure à 1,5%, de préférence encore inférieure à 1%, en pourcentage massique sur la base de la charge de départ.

La charge de départ contient une poudre de nitrure de bore dans une quantité supérieure à 90%, de préférence supérieure à 92%, de préférence supérieure à 94%, de préférence supérieure à 96%, en masse sur la base de la masse de la charge de départ.

Dans un mode de réalisation préféré, aucune poudre autre que celles apportant le nitrure de bore et optionnellement les additifs de frittage du nitrure de bore et/ou les précurseurs de tels additifs de frittage n'est introduite volontairement dans la charge de départ, les autres éléments étant des impuretés.

Dans un mode de réalisation très préféré, aucune poudre autre que celle apportant le nitrure de bore n'est introduite volontairement dans la charge de départ.

De préférence, les poudres utilisées dans la charge de départ présentent une taille médiane inférieure à inférieure à 5 micron, de préférence inférieure à 2 microns, de préférence inférieure à 1 micron. Avantageusement, l'homogénéité des agrégats de la poudre selon l'invention en est améliorée et/ou le frittage en est facilité. De préférence, si la charge de départ présente une taille médiane supérieure à 10 microns, le procédé comporte une étape b) ou b').

La charge de départ peut en outre comporter un solvant, de préférence de l'eau, dont la quantité est adaptée à la méthode de mise en forme de l'étape c) ou c'). La charge de départ peut également comporter un additif organique de mise en forme, en particulier choisi dans le groupe constitué par les plastifiants, comme le PEG ou le PVA, les liants dont liants temporaires organiques tels que des résines, les lignosulfonates, la carboxyméthylcellulose ou la dextrine, les défloculants, tels que des polyacrylates, et les mélanges de ces produits dont la quantité est adaptée à la méthode de mise en forme de l'étape c) ou c').

Comme cela est bien connu de l'homme du métier, la charge de départ est adaptée au procédé de mise en forme de l'étape c) ou c').

A l'étape b) ou b') optionnelle, un broyage peut être réalisé, à sec, comme par exemple dans un broyeur à boulet, ou en milieu humide, comme par exemple dans un broyeur à attrition. Après broyage en milieu humide, la charge de départ broyée est de préférence séchée.

A l'étape c) ou c'), la charge de départ est mise en forme sous la forme d'un bloc par toute technique connue de l'homme du métier, notamment par pressage, de manière à ce que la masse volumique relative dudit bloc soit supérieure à 60%, de préférence supérieure à 65%, de préférence supérieure à 70%, voire supérieure à 75%, voire supérieure à 80%.

A l'étape d), le bloc obtenu en fin d'étape c) subit un broyage selon toute technique connue de l'homme du métier.

A l'étape d'), le bloc est fritté à une température comprise entre 1600°C et 2100°C, de préférence entre 1800°C et 2100°C, dans une atmosphère inerte ou réductrice, de préférence sous argon, sous azote ou sous vide, de préférence sous azote ou sous argon.

A l'étape e'), le bloc obtenu en fin d'étape d') subit un broyage selon toute technique connue de l'homme du métier.

A l'étape e) ou f'), les agglomérats sont rodés selon toute technique connue de l'homme du métier, de préférence à l'aide d'un broyeur, de préférence à l'aide d'un broyeur à boulet.

A l'étape f) ou g') optionnelle, les agglomérats obtenus en fin d'étape e) ou f') peuvent subir une sélection granulométrique selon toute technique connue de l'homme du métier, par exemple par tamisage, cyclonage ou classification par air, de préférence par tamisage.

A l'étape g), les agglomérats ou le bloc sont frittés à une température comprise entre 1600°C et 2100°C, de préférence entre 1800°C et 2100°C, dans une atmosphère inerte ou réductrice, de préférence sous argon, sous azote ou sous vide, de préférence sous azote ou sous argon, cette étape permettant l'obtention des agrégats selon l'invention.

A l'étape h) optionnelle, les agrégats peuvent subir une sélection granulométrique selon toute technique connue de l'homme du métier.

Lors d'une étape optionnelle, ultérieure à l'étape h) ou g'), les agrégats peuvent subir une étape de fonctionnalisation de leur surface, notamment par des agents de couplages ou des dispersants, tels que par exemple des silanes, des siloxanes, des acides carboxyliques à longue chaine comme l'acide stéarique ou l'acide lactique. Cette étape de fonctionnalisation permet avantageusement d'améliorer la dispersion et/ou l'adhésion des agrégats frittés dans une matrice polymère.

Egalement, l'invention se rapporte à l'utilisation d'une poudre d'agrégats selon l'invention telle que précédemment décrit, en particulier fabriquée suivant un procédé telle que précédemment décrit, comme charge dans un polymère.

L'invention concerne enfin un polymère comportant une poudre d'agrégats frittés selon l'invention, c'est-à-dire un composite polymère-céramique, ou polymère chargé, dans lequel des agrégats tels que décrits précédemment sont dispersés dans une matrice polymère.

De préférence, dans le composite selon l'invention, la teneur massique d'agrégats est supérieure à 20%, de préférence supérieure à 30% et de préférence inférieure à 80%, de préférence inférieure à 70%, sur la base de la masse du polymère chargé.

Dans un tel polymère chargé, le polymère peut notamment être choisi parmi les polymères thermodurcissables, les polymères thermoplastiques. De préférence, le polymère est choisi parmi les polymères thermodurcissables. De préférence encore, le polymère thermodurcissable est choisi parmi les résines époxy et les silicones. Le polymère thermoplastique est de préférence choisi parmi le polytétrafluoréthylène ou PTFE, le polysulfure de phénylène ou PPS, le polyétheréthercétone ou PEEK, le polytéréphtalate de butylène ou PBT, les nylons, les polycarbonates et les élastomères.

Sans sortir du cadre de l'invention, la poudre constituée essentiellement d'agrégats à base de nitrure de bore selon l'invention peut être préalablement mélangée, avant son introduction dans ledit polymère, à une autre poudre, par exemple une poudre d'agrégats d'alumine. Autrement dit, la présente invention se rapporte également à tout mélange pulvérulent comprenant la poudre constituée essentiellement d'agrégats à base de nitrure de bore décrite précédemment.

L'invention et ses avantages seront mieux compris à la lecture des exemples de réalisation qui suivent, fournis uniquement à des fins illustratives et non limitatives de la présente invention.

La poudre d'agrégats de nitrure de bore selon l'exemple 1 comparatif est une poudre PCTL5MHF commercialisée par Saint-Gobain Boron Nitride.

La poudre d'agrégats de nitrure de bore selon l'exemple 2 comparatif est une poudre PCTH7MHF commercialisée par Saint-Gobain Boron Nitride.

La poudre d'agrégats de nitrure de bore selon l'exemple 3 comparatif est fabriquée à l'aide du procédé suivant : une poudre de nitrure de bore, présentant une teneur en oxygène égale à 5% poids, une teneur en calcium égale à 100 ppm, une teneur en autres éléments que l'oxygène et le calcium inférieure à 1% poids, est broyée à sec dans un broyeur à boulets de manière à ce qu'elle présente une taille médiane égale à 3 $\mu$m. La poudre est ensuite tamisée sur un tamis d'ouverture de maille égale à 80 micron puis pressée sous la forme de pastilles de 50 mm de diamètre sur une presse isostatique à une pression de 200 MPa. La masse volumique relative des pastilles obtenues est égale à 45%. Les pastilles obtenues sont ensuite broyées à l'aide d'un broyeur à rouleaux, puis rodées dans un broyeur à boulets dans lequel les boulets ont été retirés, pendant 1 heure, ledit broyeur tournant à une vitesse égale à 5 tr/min, puis tamisées, avec application d'ultrasons, à 200 $\mu$m et à 80 $\mu$m, et enfin traitées thermiquement sous azote dans un cycle présentant une vitesse de montée de 100°C/h à 2000°C, un temps de maintien à cette température de 2h et une descente de 300°C/h. La poudre ainsi obtenue est au final tamisée de manière à conserver la tranche granulométrique comprise entre 80 $\mu$m et 200 $\mu$m.

La poudre d'agrégats de nitrure de bore selon l'exemple 4, conforme à la présente invention, est fabriquée à l'aide du procédé suivant : une poudre de nitrure de bore Saint-Gobain Boron Nitride PUHP30005 présentant une teneur en oxygène égale à 1% poids, une teneur en calcium égale à 100 ppm, une taille médiane égale à 1 $\mu$m, est tamisée sur un tamis de 80 micron puis pressée sous la forme de pastilles de 50 mm de diamètre sur une presse isostatique à une pression de 200 MPa. La masse volumique relative des pastilles obtenues est égale à 75%. Les pastilles obtenues sont ensuite broyées à l'aide d'un broyeur à rouleaux, puis rodées dans un broyeur à boulets dans lequel les boulets ont été retirés, pendant 1 heure, ledit broyeur tournant à une vitesse égale à 5 tr/min, puis tamisées, avec application d'ultrasons, à 200 $\mu$m et à 80 $\mu$m, et enfin traitées thermiquement sous azote dans un cycle présentant une vitesse de montée de 100°C/h à 2000°C, un temps de maintien à cette température de 2h et une descente de 300°C/h. La poudre ainsi obtenue est au final tamisée de manière à conserver une tranche granulométrique comprise entre 80 $\mu$m et 200 $\mu$m.

La poudre d'agrégats de nitrure de bore selon l'exemple 5, conforme à la présente invention, est fabriquée à l'aide du procédé suivant : une poudre de nitrure de bore présentant une teneur en nitrure de bore égale à 95% poids, une teneur en oxygène égale à 4% poids, une teneur en calcium égale à 300 ppm, une taille médiane égale à 3 $\mu$m, est tamisée sur un tamis de 80 micron puis pressée sous la forme de pastilles de 50 mm de diamètre sur une presse isostatique à une pression de 200 MPa. La masse volumique relative des pastilles obtenues est égale à 80%. Les pastilles obtenues sont ensuite broyées à l'aide d'un broyeur à rouleaux, puis rodées dans un broyeur à boulets dans lequel les boulets ont été retirés, pendant 1 heure, ledit broyeur tournant à une vitesse égale à 5 tr/min, puis tamisées, avec application d'ultrasons, à 200 $\mu$m et à 80 $\mu$m, et enfin traitées thermiquement sous azote dans un cycle présentant une vitesse de montée de 100°C/h à 2000°C, un temps de maintien à cette température de 2h et une descente de 300°C/h. La poudre ainsi obtenue est au final tamisée de manière à conserver une tranche granulométrique comprise entre 80μm et 200 μm.

La poudre d'agrégats de nitrure de bore selon l'exemple 6, conforme à la présente invention, est fabriquée à l'aide du procédé suivant : une poudre de nitrure de bore présentant une teneur en nitrure de bore égale à 92% poids, une teneur en oxygène égale à 8% poids, une teneur en calcium égale à 10 ppm, une taille médiane égale à 3 μm, est tamisée sur un tamis de 80 micron puis pressée sous la forme de pastilles de 50 mm de diamètre sur une presse isostatique à une pression de 200 MPa. La masse volumique relative des pastilles obtenues est égale à 65%. Les pastilles obtenues sont ensuite broyées à l'aide d'un broyeur à rouleaux, puis rodées dans un broyeur à boulets dans lequel les boulets ont été retirés, pendant 1 heure, ledit broyeur tournant à une vitesse égale à 5 tr/min, puis tamisées, avec application d'ultrasons, à 200 μm et à 80 μm, et enfin traitées thermiquement sous azote dans un cycle présentant une vitesse de montée de 100°C/h à 2000°C, un temps de maintien à cette température de 2h et une descente de 300°C/h. La poudre ainsi obtenue est au final tamisée de manière à conserver une tranche granulométrique comprise entre 80μm et 200 μm.

Le tableau 1 ci-après regroupe les caractéristiques des poudres des exemples 1 à 6, après analyse élémentaire, structurale et physique réalisées au moyen des techniques décrites précédemment.

Tableau 1

| | 1(*) | 2(*) | 3(*) | 4 | 5 | 6 |
|---|---|---|---|---|---|---|
| Analyse chimique (données poids) | | | | | | |
| B (%) | 43 | 43 | 43 | 43 | 43 | 43 |
| N (%) | 56 | 56 | 56 | 56 | 56 | 56 |
| Ca (ppm) | 500 | 300 | 20 | 20 | 300 | 10 |
| autres éléments (%) | <1 | <1 | <1 | <1 | <1 | <1 |
| Dont O (ppm) | 1000 | 1000 | 1000 | 1000 | 1000 | 1000 |
| Dont C (ppm) | 100 | 100 | 100 | 100 | 100 | 100 |
| Phases cristallisées en présence et quantité en % sur la base des phases cristallisées | | | | | | |
| nitrure de bore | 100 | 100 | 100 | 100 | 100 | 100 |
| Autres caractéristiques physiques | | | | | | |
| Circularité | 0,77 | 0,75 | 0,9 | 0,93 | 0,95 | 0,95 |
| Porosité ouverte (%) | 57 | 50 | 58 | 48 | 53 | 50 |
| Taille médiane des pores (μm) | 0,75 | 0,7 | 0,16 | 0,18 | 0,45 | 1,2 |
| $D_{50}$ des agrégats (μm) | 80 | 100 | 110 | 90 | 130 | 107 |
| (*) : hors invention | | | | | | |

La teneur en oxyde de bore, telle que mesurée par titration au mannitol, est de l'ordre de 0,1% pour tous les exemples.

L'usure par attrition des poudres obtenues selon les exemples 1 à 6 est ensuite estimée à l'aide du test suivant: 20 g de poudre d'agrégats passant à travers les mailles d'un tamis d'ouverture égale à 200 μm et ne passant pas à travers les mailles d'un tamis d'ouverture égale à 80 μm sont placés dans un récipient fermé en nylon, de manière à ce que ladite poudre occupe 45% du volume dudit récipient. Le récipient est ensuite agité pendant 120 minutes à une vitesse de rotation égale à 20 tr/min dans un tourne-jarre. Après essai, la masse de particules passant à travers les mailles d'un tamis d'ouverture égale à 80 μm est déterminée. Elle correspond à la quantité de particules fines créées lors du test. Cette quantité de particules fines générées, ou « usure par attrition », est exprimée en pourcentage de la masse de la poudre avant le test. Plus ladite quantité de particules fines générées lors du test est élevée, plus l'usure par attrition de la poudre d'agrégats est importante.

On considère qu'une usure par attrition supérieure à 20% conduit à une diminution sensible de la conductivité thermique du polymère chargé comportant lesdits agrégats. De préférence, l'usure par attrition est inférieure à 15%, de préférence inférieur à 10%.

La diminution de l'usure par attrition d'une poudre d'agrégats B par rapport à une poudre d'agrégats A est égale à la différence de l'usure par attrition de la poudre A et de l'usure par attrition de la poudre B, divisée par l'usure par attrition de la poudre A, exprimé en pourcentages, la poudre A étant la poudre considérée comme référence.

Les poudres obtenues selon les exemples 1 à 6 sont ensuite utilisées comme charge dans une matrice polymère usuelle du type résine silicone TSE3033 commercialisée par Momentive Performance Materials. L'inclusion et la dispersion des agrégats dans la matrice polymère sont réalisées selon le protocole suivant :

Chaque poudre est dispersée dans la résine silicone TSE3033 (les deux parties A et B de la résine étant mélangées en quantité égale, en poids) à température ambiante dans un mélangeur Rayneri VMI Turbotest commercialisé par la société VMI, avec une vitesse de rotation égale à 200 tours par minute. La masse de poudre introduite est égale à 40%, sur la base de la somme de la masse de la résine silicone TSE3033 et de la masse de la poudre. Chaque mélange ainsi obtenu est ensuite coulé de manière à obtenir un film présentant une épaisseur égale à 5 mm. Ledit film est ensuite chauffé à une température égale à 100°C pendant un temps égal à 2 heures.

Des mesures de conductivité thermique traversante sont effectuées sur chaque film polymère obtenu, la conductivité thermique traversante ou «through plane» en anglais désignant la conductivité thermique mesurée selon la direction perpendiculaire au film de polymère, autrement dit mesurée selon l'épaisseur dudit film.

Les mesures sont effectuées selon les normes et protocoles expérimentaux suivants :

La conductivité thermique est donnée classiquement par le produit de la diffusivité, de la densité et de la capacité thermique.

Plus particulièrement on mesure selon l'invention la conductivité thermique « through plane » par le produit de la diffusivité thermique traversante, de la densité et de la capacité thermique.

La diffusivité thermique des polymères est mesurée selon la norme ASTM C-518 par la méthode des flux thermiques. La diffusivité est mesurée perpendiculairement à la couche polymère (diffusivité thermique traversante). La capacité thermique des polymères est mesurée par calorimétrie différentielle à balayage (en anglais, «differential scanning calorimetry» ou «DSC») sur une thermobalance Netzsch.

La densité des polymères est mesurée par pycnométrie à l'hélium.

L'amélioration de la conductivité thermique d'un polymère chargé comportant une poudre d'agrégats B par rapport à un polymère chargé comportant un poudre d'agrégats A est égale à la différence de la conductivité thermique du polymère chargé comportant la poudre B et de la conductivité thermique du polymère chargé comportant la poudre A, divisée par la conductivité thermique du polymère chargé comportant la poudre A, exprimé en pourcentages (le polymère chargé comportant la poudre A étant le polymère chargé de référence).

Les résultats des tests d'usure par attrition des poudres d'agrégats et des mesures de conductivité thermique figurent dans le tableau 2 suivant :

Tableau 2

| exemple | Circularité | Porosité ouverte (%) | taille médiane de pores ($\mu$m) | Teneur en calcium (ppm) | Usure par attrition (%) | Diminution de l'usure par attrition de la poudre de l'exemple / poudre selon l'exemple 1 | conductivité thermique du polymère chargé avec la poudre de granules de l'exemple (W/m.K) | Amélioration de la conductivité thermique du polymère chargé avec la poudre de l'exemple / au polymère chargé avec la poudre selon l'exemple 1 |
|---|---|---|---|---|---|---|---|---|
| 1(*) | 0,77 | 57 | 0,75 | 500 | 31 | - | 0,5 | - |
| 2(*) | 0,75 | 50 | 0,7 | 300 | 23 | - 26% | 0,8 | +60% |
| 3(*) | 0,9 | 58 | 0,16 | 20 | 25 | -19% | 0,5 | 0 |
| 4 | 0,93 | 48 | 0,18 | 20 | 7 | -77% | 1 | +100% |
| 5 | 0,95 | 53 | 0,45 | 300 | 11 | -65% | 0,9 | +80% |
| 6 | 0,95 | 50 | 1,2 | 10 | 14 | -55% | 0,9 | +80% |
| (*) : hors invention | | | | | | | | |

Les données reportées dans le tableau 2 montrent que les poudres d'agrégats à base de nitrure de bore selon l'invention des exemples 4, 5, 6 présentent une usure par attrition mesurée à 7%, 11% et 14%, respectivement et que le polymère chargé obtenu à partir desdites poudres d'agrégats à base de nitrure de bore selon l'invention des exemples 4, 5 et 6 présente une conductivité thermique traversante très supérieure à celle de tous les autres échantillons.

Plus précisément, la poudre d'agrégats selon l'exemple 1 conforme à l'enseignement du document WO2014/136959 ne satisfait pas le compromis recherché : En particulier, l'usure par attrition apparaît plus élevée que celle des exemples 4 à 6 selon l'invention.

Le meilleur compromis n'est pas satisfait non plus par la poudre d'agrégats selon l'exemple 2 (hors invention) et pour le polymère chargé comportant ladite poudre : bien que plus faible que celle de l'exemple 1, l'usure par attrition de la poudre d'agrégats est encore trop élevée. La conductivité thermique du polymère chargé comportant ladite poudre est cependant sensiblement supérieure (de 60%) à celle du polymère chargé comportant la poudre selon l'exemple 1.

En ce qui concerne la poudre d'agrégats selon l'exemple 3 (hors invention) ne comprenant pas de calcium et le polymère chargé comportant ladite poudre, on constate que l'usure par attrition de la poudre d'agrégats est toujours trop élevée et que la conductivité thermique du polymère chargé comportant ladite poudre n'est pas améliorée par rapport à celle du polymère chargé comportant la poudre selon l'exemple 1.

Les meilleurs résultats et compromis sont obtenus pour les poudres d'agrégats selon les exemples 4, 5 et 6 selon l'invention et le polymère chargé comportant lesdites poudres : l'usure par attrition de la poudre d'agrégats des exemples 4, 5 et 6 est limitée à seulement 7%, 11 et 14% respectivement, c'est-à-dire bien inférieure à l'usure par attrition des poudres d'agrégats des exemples comparatifs 1, 2 et 3. La conductivité thermique du polymère chargé comportant la poudre d'agrégats selon les exemples 4, 5 et 6 est supérieure à la conductivité thermique du polymère chargé comportant la poudre d'agrégats des exemples comparatifs 1, 2 et 3. L'exemple 4 est l'exemple préféré d'entre tous: l'usure par attrition de la poudre d'agrégats de cet exemple est la plus faible des usures mesurées sur les poudres des exemples, et la conductivité thermique du polymère chargé comportant la poudre d'agrégats dudit exemple 4 est en particulier de l'ordre du double de celle du polymère chargé comportant la poudre selon l'exemple 1 et dans l'absolu la plus élevée de tous les échantillons testés.

Une comparaison entre les poudres d'agrégats des exemples 1 et 4 permet ainsi de mettre en évidence l'amélioration significative obtenue selon l'invention par un ajustement spécifique des paramètres de porosité ouverte, de la teneur en calcium, de la circularité des agrégats et de la taille moyenne des pores.

En particulier, au regard de l'enseignement de la publication antérieure WO2014/136959 décrite précédemment, la société déposante a démontré l'impact cumulé de la diminution de la taille moyenne des pores, de la diminution de la teneur en calcium, de la diminution de la porosité ouverte et de l'augmentation de la circularité sur les propriétés de résistance à l'attrition et de conductivité thermique du polymère chargé comportant lesdites poudres.

En particulier si on compare les exemples 1 (selon WO2014/136959) et 4 (selon l'invention), on constate que :

- l'usure par attrition diminue de 31% à 7%, soit une diminution égale à 77%,
- la conductivité thermique du polymère chargé augmente de 0,5 à 1 W/m.K et est améliorée de 100%.

De manière inattendue, au vu du meilleur compromis obtenu grâce à leur ajustement conformément à la présente invention, les inventeurs ont ainsi mis en évidence une véritable synergie entre les caractéristiques de circularité, de porosité ouverte, de taille moyenne de pores et de teneur en calcium.

**Revendications**

**1.** Poudre constituée essentiellement d'agrégats à base de nitrure de bore, ladite poudre présentant :

a) la composition chimique globale suivante, en pourcentages massiques :

- entre 40 et 45% de bore, bornes incluses,
- entre 53 et 57% d'azote, bornes incluses,
- une teneur en calcium inférieure à 400 ppm poids,
- moins de 5%, au total, d'autres éléments ;

b) une composition structurale comprenant plus de 90% de nitrure de bore, borne incluse, en pourcentages poids et sur la base de la totalité des phases cristallisées présentes dans ladite poudre ;
c) les caractéristiques physiques suivantes :

- une circularité moyenne supérieure ou égale à 0,90,

- une taille médiane de pores inférieure ou égale à 1,5 $\mu$m,
- une porosité ouverte inférieure ou égale à 55%.

2. Poudre selon la revendication 1, présentant une taille médiane de pores inférieure ou égale à 0,3 $\mu$m.

3. Poudre selon l'une des revendications précédentes, présentant la composition chimique globale suivante :

   - une teneur en bore supérieure ou égale à 41% et inférieure ou égale à 44%,
   - une teneur en azote supérieure ou égale à 54% et inférieure ou égale à 56%,
   - une teneur en calcium inférieure à 300 ppm poids, de préférence inférieure à 200 ppm poids.

4. Poudre selon l'une des revendications précédentes, présentant une composition chimique dans laquelle la teneur massique en d'autres éléments que B, N, Ca est inférieure à 4%, de préférence inférieure à 2%, et dans laquelle la teneur en oxygène est inférieure à 5000 ppm poids, de préférence inférieure à 2000 ppm poids.

5. Poudre selon l'une des revendications 1 à 3 précédentes, présentant une composition chimique dans laquelle les autres éléments comportent un additif de frittage du nitrure de bore, en une quantité de préférence supérieure ou égale à 0,5% et inférieure à 4%.

6. Poudre selon la revendication précédente dans laquelle l'additif de frittage du nitrure de bore est choisi parmi LaB$_6$; les oxydes de terres rares, d'éléments des colonnes 3 et 4 du tableau périodique des éléments et de leurs mélanges; les nitrures des éléments de la colonne 4 du tableau périodique des éléments; et leurs mélanges.

7. Poudre selon l'une des revendications précédentes, dans laquelle la composition structurale comprend plus de 95%, de préférence plus de 98%, de nitrure de bore, en pourcentages poids et sur la base de la totalité des phases cristallisées présentes dans ladite poudre.

8. Poudre selon l'une des revendications précédentes, présentant une composition structurale dans laquelle le nitrure de bore est présent pour plus de 60% sous une structure hexagonale, en pourcentages poids et sur la base des phases cristallisées de nitrure de bore présentes dans ladite poudre.

9. Poudre selon l'une des revendications précédentes, présentant une circularité moyenne supérieure ou égale à 0,92.

10. Poudre selon l'une des revendications précédentes, présentant une taille médiane de pores inférieure ou égale à 0,25 $\mu$m et de préférence supérieure à 0,05 $\mu$m.

11. Poudre selon l'une des revendications précédentes, présentant une porosité ouverte inférieure à 50%, de préférence inférieure à 49%.

12. Poudre selon l'une des revendications précédentes, présentant une taille médiane supérieure à 30 $\mu$m et inférieure à 500 $\mu$m.

13. Procédé de fabrication d'une poudre selon l'une des revendications précédentes, comportant les étapes suivantes:

   a) préparation d'une charge de départ dont la composition est adaptée de manière à obtenir, à l'issue de l'étape g) ladite poudre, ladite charge de départ comportant des grains de nitrure de bore, la poudre de grains de nitrure de bore présentant une teneur en oxygène inférieure ou égale à 10% poids et une teneur en calcium inférieure à 400 ppm poids,
   b) optionnellement broyage de ladite charge de départ,
   c) mise en forme de la charge de départ sous la forme d'un bloc présentant une masse volumique relative supérieure ou égale à 60%,
   d) broyage dudit bloc de manière à obtenir des agglomérats,
   e) rodage des agglomérats obtenus en fin d'étape d) de manière à ce qu'ils présentent une circularité supérieure ou égale à 0,90,
   f) optionnellement sélection granulométrique des agglomérats,
   g) frittage des agglomérats à une température de frittage supérieure à 1600°C et inférieure à 2100°C, dans une atmosphère inerte ou faiblement réductrice,
   h) optionnellement sélection granulométrique des agrégats.

**14.** Procédé de fabrication d'une poudre selon l'une des revendications 1 à 12 précédentes, comportant les étapes suivantes:

a') préparation d'une charge de départ dont la composition est adaptée de manière à obtenir, à l'issue de l'étape f') ladite poudre, ladite charge de départ comportant des grains de nitrure de bore, la poudre de grains de nitrure de bore présentant une teneur en oxygène inférieure ou égale à 10% poids et une teneur en calcium inférieure à 400 ppm poids,
b') optionnellement broyage de ladite charge de départ,
c') mise en forme de la charge de départ sous la forme d'un bloc présentant une masse volumique relative supérieure ou égale à 60%,
d') frittage dudit bloc à une température de frittage supérieure à 1600°C et inférieure à 2100°C, dans une atmosphère inerte ou faiblement réductrice,
e') broyage dudit bloc de manière à obtenir des agrégats,
f') rodage des agrégats obtenus en fin d'étape e') de manière à ce qu'ils présentent une circularité supérieure ou égale à 0,90,
g') optionnellement sélection granulométrique des agrégats.

**15.** Procédé selon l'une des deux revendications précédentes, dans lequel à l'étape a) ou a'), la teneur totale en calcium est inférieure à 300 ppm poids et/ou la teneur totale en oxygène est inférieure à 5%, de préférence inférieure à 2%, en pourcentage massique sur la base de la charge de départ.

**16.** Procédé selon l'une des trois revendications précédentes, dans lequel à l'étape c) ou c'), la charge de départ est mise en forme sous la forme d'un bloc de manière à ce que la masse volumique relative dudit bloc soit supérieure à 65%, de préférence supérieure à 70%.

**17.** Polymère chargé comprenant un polymère dans lequel est dispersée une poudre telle que décrite dans l'une des revendications 1 à 12.

**18.** Polymère chargé selon la revendication précédente, dans lequel le polymère est choisi parmi les résines époxy, les silicones, les nylons, le polytétrafluoréthylène, le polysulfure de phénylène, le polyétheréthercétone, le polytéréphtalate de butylène, les nylons, les polycarbonates et les élastomères.

**Patentansprüche**

**1.** Pulver, das im Wesentlichen aus Aggregaten auf Bornitridbasis besteht, wobei das Pulver aufweist:

a) die folgende chemische Gesamtzusammensetzung, in Massenprozent:

- zwischen 40 und 45 % Bor, einschließlich der Grenzwerte,
- zwischen 53 und 57 % Stickstoff, einschließlich der Grenzwerte,
- einen Calciumgehalt von unter 400 ppm Gewicht,
- insgesamt weniger als 5 % andere Elemente;

b) eine strukturelle Zusammensetzung, die mehr als 90 % Bornitrid, einschließlich Grenzwert, in Gewichtsprozent und auf der Basis der Gesamtheit der in dem Pulver vorliegenden kristallisierten Phasen umfasst;
c) die folgenden physikalischen Eigenschaften:

- eine durchschnittliche Rundheit von über oder gleich 0,90,
- eine mittlere Porengröße von unter oder gleich 1,5 $\mu$m,
- eine offene Porosität von unter oder gleich 55 %.

**2.** Pulver nach Anspruch 1, das eine mittlere Porengröße von unter oder gleich 0,3 $\mu$m aufweist.

**3.** Pulver nach einem der vorhergehenden Ansprüche, das die folgende chemische Gesamtzusammensetzung aufweist:

- einen Borgehalt von über oder gleich 41 % und unter oder gleich 44 %,

- einen Stickstoffgehalt von über oder gleich 54 % und unter oder gleich 56 %,
- einen Calciumgehalt von unter 300 ppm Gewicht, bevorzugt unter 200 ppm Gewicht.

4. Pulver nach einem der vorhergehenden Ansprüche, das eine chemische Zusammensetzung aufweist, in welcher der Massengehalt an anderen Elementen als B, N, Ca unter 4 %, bevorzugt unter 2 %, beträgt und in welcher der Sauerstoffgehalt unter 5000 ppm Gewicht, bevorzugt unter 2000 ppm Gewicht, beträgt.

5. Pulver nach einem der vorhergehenden Ansprüche 1 bis 3, das eine chemische Zusammensetzung aufweist, in der die anderen Elemente ein Sinteradditiv des Bornitrids in einer Menge von bevorzugt über oder gleich 0,5 % und unter 4 % umfassen.

6. Pulver nach vorhergehendem Anspruch, wobei das Sinteradditiv des Bornitrids aus $LaB_6$; Seltenerdoxiden, Elementen der Spalten 3 und 4 des Periodensystems der Elemente und ihren Gemischen; den Nitriden der Elemente der Spalte 4 des Periodensystems der Elemente; und ihren Gemischen ausgewählt ist.

7. Pulver nach einem der vorhergehenden Ansprüche, wobei die strukturelle Zusammensetzung mehr als 95 %, bevorzugt mehr als 98 % Bornitrid in Gewichtsprozent und auf der Grundlage der Gesamtheit der in dem Pulver vorliegenden kristallisierten Phasen umfasst.

8. Pulver nach einem der vorhergehenden Ansprüche, das eine strukturelle Zusammensetzung aufweist, in der das Bornitrid zu mehr als 60%, in Gewichtsprozent und auf der Grundlage der in dem Pulver vorliegenden kristallisierten Phasen von Bornitrid, in einer hexagonalen Struktur vorliegt.

9. Pulver nach einem der vorhergehenden Ansprüche, das eine durchschnittliche Rundheit von über oder gleich 0,92 aufweist.

10. Pulver nach einem der vorhergehenden Ansprüche, das eine mittlere Porengröße von unter oder gleich 0,25 $\mu$m und bevorzugt über 0,05 $\mu$m aufweist.

11. Pulver nach einem der vorhergehenden Ansprüche, das eine offene Porosität von unter 50 %, bevorzugt unter 49 %, aufweist.

12. Pulver nach einem der vorhergehenden Ansprüche, das eine mittlere Größe von über 30 $\mu$m und unter 500 $\mu$m aufweist.

13. Verfahren zur Herstellung eines Pulvers nach einem der vorhergehenden Ansprüche, das die folgenden Schritte aufweist:

a) Zubereiten eines Rohmaterials, dessen Zusammensetzung so angepasst ist, dass nach Schritt g) das Pulver erhalten wird, wobei das Rohmaterial Bornitridkörner aufweist, wobei das Pulver aus Bornitridkörnern einen Sauerstoffgehalt von unter oder gleich 10 Gew.-% und einen Calciumgehalt von unter 400 ppm Gewicht aufweist,
b) optional Mahlen des Rohmaterials,
c) Formen des Rohmaterials in Form eines Blocks, der eine relative Dichte von über oder gleich 60 % aufweist,
d) Mahlen des Blocks, so dass Agglomerate erhalten werden,
e) Schleifen der am Ende von Schritt d) erhaltenen Agglomerate, so dass sie eine Rundheit von über oder gleich 0,90 aufweisen,
f) optional Korngrößenselektion der Agglomerate,
g) Sintern der Agglomerate bei einer Sintertemperatur von über 1600 °C und unter 2100 °C in einer inerten oder schwach reduzierenden Atmosphäre,
h) optional Korngrößenselektion der Aggregate.

14. Verfahren zur Herstellung eines Pulvers nach einem der vorhergehenden Ansprüche 1 bis 12, das die folgenden Schritte aufweist:

a') Zubereiten eines Rohmaterials, dessen Zusammensetzung so angepasst ist, dass nach Schritt f') das Pulver erhalten wird, wobei das Rohmaterial Bornitridkörner aufweist, wobei das Pulver aus Bornitridkörnern einen Sauerstoffgehalt von unter oder gleich 10 Gew.-% und einen Calciumgehalt von unter 400 ppm Gewicht aufweist,
b') optional Mahlen des Rohmaterials,

c') Formen des Rohmaterials in Form eines Blocks, der eine relative Dichte von über oder gleich 60 % aufweist,
d') Sintern des Blocks bei einer Sintertemperatur von über 1600 °C und unter 2100 °C in einer inerten oder schwach reduzierenden Atmosphäre,
e') Mahlen des Blocks, so dass Aggregate erhalten werden,
f') Schleifen der am Ende von Schritt e') erhaltenen Aggregate, so dass sie eine Rundheit von über oder gleich 0,90 aufweisen,
g') optional Korngrößenselektion der Aggregate.

15. Verfahren nach einem der beiden vorhergehenden Ansprüche, wobei in Schritt a) oder a') der Gesamtgehalt an Calcium unter 300 ppm Gewicht beträgt und/oder der Gesamtgehalt an Sauerstoff unter 5 %, bevorzugt unter 2 %, in Massenprozent auf der Grundlage des Rohmaterials beträgt.

16. Verfahren nach einem der drei vorhergehenden Ansprüche, wobei in Schritt c) oder c') das Rohmaterial in Form eines Blocks geformt wird, so dass die relative Dichte des Blocks über 65 %, bevorzugt über 70 %, beträgt.

17. Beladenes Polymer, das ein Polymer umfasst, in dem ein Pulver wie das in einem der Ansprüche 1 bis 12 beschriebene dispergiert ist.

18. Beladenes Polymer nach vorhergehendem Anspruch, wobei das Polymer aus den Epoxidharzen, den Silikonen, den Nylons, dem Polytetrafluorethylen, dem Phenylenpolysulfid, dem Polyetheretherketon, dem Butylenterephthalat, den Nylons, den Polycarbonaten und den Elastomeren ausgewählt ist.

**Claims**

1. Powder essentially composed of aggregates based on boron nitride, the said powder exhibiting:

   a) the following overall chemical composition, as percentages by weight:

   - between 40 and 45% of boron, limits included,
   - between 53 and 57% of nitrogen, limits included,
   - a calcium content of less than 400 ppm by weight,
   - less than 5%, in total, of other elements;

   b) a structural composition comprising more than 90% of boron nitride, limit included, as percentage by weight and on the basis of the combined crystalline phases present in the said powder,
   c) the following physical characteristics:

   - a mean circularity of greater than or equal to 0.90,
   - a median pore size of less than or equal to 1.5 $\mu$m,
   - an apparent porosity of less than or equal to 55%.

2. Powder according to Claim 1, exhibiting a median pore size of less than or equal to 0.3 $\mu$m.

3. Powder according to either of the preceding claims, exhibiting the following overall chemical composition:

   - a boron content of greater than or equal to 41% and of less than or equal to 44%,
   - a nitrogen content of greater than or equal to 54% and of less than or equal to 56%,
   - a calcium content of less than 300 ppm by weight and preferably of less than 200 ppm by weight.

4. Powder according to one of the preceding claims, exhibiting a chemical composition in which the content by weight of elements other than B, N and Ca is less than 4%, preferably less than 2%, and in which the oxygen content is less than 5000 ppm by weight, preferably less than 2000 ppm by weight.

5. Powder according to one of the preceding Claims 1 to 3, exhibiting a chemical composition in which the other elements comprise an additive for the sintering of the boron nitride, in an amount preferably of greater than or equal to 0.5% and of less than 4%.

6. Powder according to the preceding claim, in which the additive for the sintering of the boron nitride is chosen from $LaB_6$; oxides of rare earth metals, of elements from Groups 3 and 4 of the Periodic Table of the Elements and of their mixtures; nitrides of the elements from Group 4 of the Periodic Table of the Elements; and their mixtures.

7. Powder according to one of the preceding claims, in which the structural composition comprises more than 95%, preferably more than 98%, of boron nitride, as percentage by weight and on the basis of the combined crystalline phases present in the said powder.

8. Powder according to one of the preceding claims, exhibiting a structural composition in which the boron nitride is present for more than 60% under a hexagonal structure, as percentage by weight and on the basis of the crystalline boron nitride phases present in the said powder.

9. Powder according to one of the preceding claims, exhibiting a mean circularity of greater than or equal to 0.92.

10. Powder according to one of the preceding claims, exhibiting a median pore size of less than or equal to 0.25 μm and preferably of greater than 0.05 μm.

11. Powder according to one of the preceding claims, exhibiting an apparent porosity of less than 50%, preferably of less than 49%.

12. Powder according to one of the preceding claims, exhibiting a median size of greater than 30 μm and of less than 500 μm.

13. Process for the manufacture of a powder according to one of the preceding claims, comprising the following stages:

   a) preparation of a starting feedstock, the composition of which is adapted so as to obtain the said powder on conclusion of stage g), the said starting feedstock comprising boron nitride grains, the powder formed of boron nitride grains exhibiting an oxygen content of less than or equal to 10% by weight and a calcium content of less than 400 ppm by weight,
   b) optionally, grinding the said starting feedstock,
   c) shaping the starting feedstock into the form of a block exhibiting a relative density of greater than or equal to 60%,
   d) grinding the said block so as to obtain agglomerates,
   e) burnishing the agglomerates obtained at the end of stage d) so that they exhibit a circularity of greater than or equal to 0.90,
   f) optionally, particle size selection of the agglomerates,
   g) sintering the agglomerates at a sintering temperature of greater than 1600°C and of less than 2100°C, in an inert or weakly reducing atmosphere,
   h) optionally, particle size selection of the aggregates.

14. Process for the manufacture of a powder according to one of the preceding Claims 1 to 12, comprising the following stages:

   a') preparation of a starting feedstock, the composition of which is adapted so as to obtain the said powder on conclusion of stage f'), the said starting feedstock comprising grains of boron nitride, the powder formed of grains of boron nitride exhibiting an oxygen content of less than or equal to 10% by weight and a calcium content of less than 400 ppm by weight,
   b') optionally, grinding the said starting feedstock, c') shaping the starting feedstock into the form of a block exhibiting a relative density of greater than or equal to 60%,
   d') sintering the said block at a sintering temperature of greater than 1600°C and of less than 2100°C, in an inert or weakly reducing atmosphere,
   e') grinding the said block so as to obtain aggregates,
   f') burnishing the aggregates obtained at the end of stage e') so that they exhibit a circularity of greater than or equal to 0.90,
   g') optionally, particle size selection of the aggregates.

15. Process according to one of the two preceding claims, in which, in stage a) or a'), the total calcium content is less than 300 ppm by weight and/or the total oxygen content is less than 5%, preferably less than 2%, as percentage by weight on the basis of the starting feedstock.

16. Process according to one of the three preceding claims, in which, in stage c) or c'), the starting feedstock is shaped into the form of a block so that the relative density of the said block is greater than 65% and preferably greater than 70%.

17. Particulate-filled polymer comprising a polymer in which a powder as described in one of Claims 1 to 12 is dispersed.

18. Particulate-filled polymer according to the preceding claim, in which the polymer is chosen from epoxy resins, silicones, polytetrafluoroethylene, polyphenylene sulphide, polyetheretherketone, polybutylene terephthalate, nylons, polycarbonates and elastomers.

**EP 3 310 733 B1**

## RÉFÉRENCES CITÉES DANS LA DESCRIPTION

**Documents brevets cités dans la description**

- US 20030073769 A
- US 20080076856 A
- WO 2008088774 A
- WO 2014136959 A